# EUROPEAN PATENT APPLICATION

(11) **EP 2 378 502 A2**
(43) Date of publication of application: **19.10.2011**
(21) Application number: 11163075.2
(22) Date of filing: 19.04.2011
(51) Int. Cl.: G09B 7/00, G09B 19/00, G06Q 10/00

(54) **Human reliability assessment tool supporting safety issue analysis and management**

(30) Priority: 19.04.2010 US 763111
(71) Applicant: The Boeing Company, Chicago, IL 60606-2016 (US)
(72) Inventor: Mumaw, Randall J., Seattle, WA 98116 (US); Fucke, Lars, 28002 Madrid (ES); Kennedy, Richard J., 28820 Madrid (ES); Breuhaus, Richard S., Issaquah, WA 98027 (US)
(74) Representative: Howson, Richard G.B.

(57) **Abstract**

According to an embodiment, a human reliability assessment tool includes at least one performance assessment worksheet regarding at least one of the group of the evaluation of a scenario, the making of a decision selecting a response to the scenario, and the carrying out of the response. The performance assessment worksheet is an electronic structured information entry document on machine-readable media enabled by a processor of a computerized device. A plurality of checklist information entry items are incorporated into the performance assessment worksheet. A modeling portion of the performance assessment worksheet is structured for recording an information entry relating to a step in a model of human performance. A linkage is formed between the checklist information entry items and a plurality of related effects within a relevant operational environment. An automated determination is made as to whether specific performance levels are achieved within the relevant operational environment.

## Description

### BACKGROUND

The disclosed subject matter relates to apparatus, processes and programmed or programmable computer machines for situational human performance assessment in an operational environment.

As technology continues to be developed for humans to use or operate complex systems such as airplanes, ships, trains, and nuclear power plants, it becomes even more important to understand the inherent risks involved in operating these systems, including understanding how well the humans can manage abnormal/non-normal/upset conditions. This is generally referred to as human reliability analysis (HRA). As used herein, the terms abnormal, non-normal, or upset conditions refer to any conditions that are different from guideline conditions. HRA has been approached from several perspectives. Sometimes there is an attempt to model the performance of the human operators and their likely errors. Sometimes reliability is based more on historical data regarding observed error rates for elemental tasks. Much of the focus has been on generating error rates that can be plugged into a larger system risk analysis.

However, there is typically some basic model of human performance that guides the analysis. Almost all symbolic processing models, however, have a common model underpinning them, namely the Rasmussen Step Ladder Model discussed in Rasmussen, J., Diagnostic reasoning in action, IEEE Transactions on Systems, Man and Cybernetics, Vol. 23, No. 4, pp. 981-1133 (1993).

An example of a current human performance assessment process involves assessors, such as members of a safety review board (SRB), examining continued airworthiness of an aircraft type. Information available to the SRB members can include relevant technical information on the systems involved in a particular abnormal occurrence scenario, as well as flight-crew-related, regulatory and historical information. Currently, depending on availability of historical or experimental data, quantitative estimates of human reliability or unreliability during a given scenario often are made. However, there are concerns about the data on which human error rates are based which can weaken the effectiveness of a process that relies on these error rate estimates. Especially in these cases a standardized process providing help in estimating flight crew reliability could support an SRB making well-founded decisions.

There is, therefore, a need for a more simple, valid and consistent process, programmed computer and/or apparatus for implementing a human reliability assessment that is scenario-specific as opposed to operational personnel specific, to assist in design of procedures, interfaces and controls for assisting in the proper performance by an operator(s) such as a pilot or flight crew in an aircraft, upon the occurrence of an abnormal situation. Such an abnormal condition may be defined by a specific scenario relating to a specific operational environment, such as a specific aircraft. A need exists to provide a tool for addressing safety-related issues incorporating a human reliability component and aiming at providing dependable information upon which safety-related decisions and proposed corrections can be better based.

### SUMMARY

In one aspect the present disclosure provides a human reliability assessment tool, comprising: at least one performance assessment worksheet regarding at least one of the group consisting of the evaluation of a scenario, the making of a decision selecting a response to the scenario, and the carrying out of the response, wherein the performance assessment worksheet is an electronic structured information entry document on machine readable media enabled by a processor of a computerized device; a plurality of checklist information entry items incorporated into the performance assessment worksheet; a modeling portion of the performance assessment worksheet structured for recording an information entry relating to a step in a model of human performance; and a linkage between the checklist information entry items and a plurality of related effects within a relevant operational environment, wherein an automated determination is made as to whether specific performance levels are achieved within the relevant operational environment.

One embodiment of the disclosure also provides a method of assessing human reliability, the method comprising: utilizing a performance assessment worksheet regarding any one or more of the group consisting of the evaluation of a scenario, the making of a decision selecting a response to the scenario, and the carrying out of the response; the performance assessment worksheet comprising an electronic structured information entry document enabled by a processor of a computerized device; recording an information entry into the electronic structured information entry document, the information entry relating to a step in a model of human performance; recording additional information entry items into the electronic structured information entry document; linking the additional information entry items and a plurality of related effects within a relevant operational environment; and automatically determining whether specific performance levels are achieved within the relevant operational environment based on the additional information entry items recorded.

In yet another aspect, the disclosure provides a computer program usable as a human reliability assessment tool stored on a computerized system having a processor, the computer program having computer readable program code for program executables embodied therein, the program executables comprising the steps: defining a scenario; defining a desired action to be taken by at least one member of a flight crew for the scenario; defining a required performance level for the scenario; defining a reliability needed for the required performance level; and receiving data from at least one member of the flight crew documenting effects in the operational environment and summarizing results from the action.

The features, functions, and advantages that have been discussed can be achieved independently in various embodiments of the present invention or may be combined in yet other embodiments further details of which can be seen with reference to the following description and drawings.

### BRIEF DESCRIPTION OF THE DRAWINGS

The present disclosure will be described more fully with reference to the accompanying drawings. Some, but not all, possible embodiments are shown. The disclosed subject matter may be embodied in many different forms and should not be construed as limited to the described embodiments. The features, functions, and advantages that are disclosed can be achieved independently in various embodiments of the present disclosure or may be combined in yet other embodiments, further details of which can be seen with reference to the following description and drawings, wherein like numerals and variables depict, respectively, like parts and parameters, and wherein:
FIG. 1 shows an illustration of an evaluation worksheet corresponding to a welcome worksheet of a human reliability evaluation checklist spreadsheet according to aspects of a possible embodiment;
FIGs. 2A-2D show illustrations of a Documentation of Events worksheet of a human reliability evaluation checklist spreadsheet according to aspects of a possible embodiment;
FIG. 3 shows an illustration of an Alerting or Detection worksheet of a human reliability evaluation checklist spreadsheet according to aspects of a possible embodiment;
FIG. 4 shows an illustration of a Situational Assessment worksheet of a human reliability evaluation checklist spreadsheet according to aspects of a possible embodiment;
FIGS. 5A-5B show illustrations of a Documentation of Action to Be Taken worksheet of a human reliability evaluation checklist spreadsheet according to aspects of a possible embodiment;
FIG. 6 shows an illustration of a Selection of Actions to Be Taken worksheet of a human reliability evaluation checklist spreadsheet according to aspects of a possible embodiment;
FIG. 7 shows an illustration of a Prioritizing of the Action worksheet of a human reliability evaluation checklist spreadsheet according to aspects of a possible embodiment;
FIG. 8 shows an illustration of an Intentional Deviation from Procedure worksheet of a human reliability evaluation checklist spreadsheet according to aspects of a possible embodiment;
FIG. 9 shows an illustration of a Documentation of Controls to Be Actuated worksheet of a human reliability evaluation checklist spreadsheet according to aspects of a possible embodiment;
FIGS. 10A-10B show illustrations of an Execution worksheet of a human reliability evaluation checklist spreadsheet according to aspects of a possible embodiment;
FIG. 11 shows an illustration of an Execution - Detection of Errors worksheet of a human reliability evaluation checklist spreadsheet according to aspects of a possible embodiment;
Fig. 12 shows an illustration of an Execution - Recovery from Error worksheet of a human reliability evaluation checklist spreadsheet according to aspects of a possible embodiment; and,
Fig. 13 shows an illustration of an Analysis worksheet of a human reliability evaluation checklist spreadsheet according to aspects of a possible embodiment.

### DETAILED DESCRIPTION

The disclosure has utility for use in connection with the transportation industry for assessing performance of the pilot/flight deck crew of an aircraft and will be described in connection with such utilities, although other utilities are contemplated including but not limited to other operators' transportation modes, e.g., rail, marine, space flight, as well as other high risk/high consequence industries: nuclear power plants, chemical plants, the medical arena, the military arena, energy grids, pipelines, construction, and demolition, etc. Examples of the medical arena can include, but are not limited to, an operating room, an emergency room, and application of medication therapies. Examples of the military arena can include, but are not limited to, operation of drones and unmanned aerial vehicles.

Applicants have determined that the requirements for a risk measurement and analysis tool include an initial focus on the operator interface and procedures. Such a tool should also be useful to focus on roles, responsibilities and tasks of the operator(s) - driver(s)/pilot(s) of the system in question. In addition an ability to present an explicit specification of any assumptions made by the assessor is desirable along with a justification and rationale for all such assumptions made. Further, such a tool should provide for assessment tied to a model of human performance and/or reliability and known error types.

Applicants have developed an assessment framework in a format in which the assessment is implemented that provides visibility of information processing at the level of the operator, e.g., flight deck interface elements which can be linked to the cognitive processes of the operator, such as a pilot, and how these in turn contribute to the expected reliability of the operator's performance. The Rasmussen Step Ladder Model has been chosen in order to organize the decision making process in a given scenario. Other such operators and environments might include a nuclear power plant operator and power plant control room. Hereinafter, the use of the term operator or pilot or flight crew shall be deemed to include these other types of operators and operating environments.

Applicants according to aspects of a possible embodiment have chosen to implement a Step Ladder Model via a "checklist." A "checklist" format can guide the assessor through the process and can serve as an intuitive tool providing the assessor with a comprehensive list of items that need to be considered for any given scenario regarding a response to a non-normal occurrence. The assessor can be required to record whether these items apply or not and to provide some justification and/or rationale behind those judgments.

According to aspects of a possible embodiment, a checklist can be produced according to a definition of an abnormal occurrence such as a system malfunction, failure or mis-configuration scenario, e.g., by system safety engineers, including scenarios whose resolution relies upon operator intervention or mitigation. This can enable risk assessment to focus on failure cases and the scenarios that accompany them. As well as operator intervention and mitigation, issues of errors can be dealt with in the risk assessment framework. Utilization of "hinder factors" in the checklist structure can prompt consideration of errors in the assessment, which also relates to questions such as how an operator acts to address the abnormal occurrence scenario discussed below.

Working through the human reliability assessment checklist spreadsheet worksheets the assessor can then systematically identify how such things as the system interface, checklists and procedures and external factors support or hinder the operator(s) in performing the required action(s). Analysis of the identified factors can then reveal potential shortfalls of the system interface, checklists and procedures and can then guide the assessor to shortfalls that need to be addressed. If, based on the review of the identified factors, the present situation is evaluated as sufficiently safe the assessment can be concluded. This judgment about sufficiency relates to the level of human reliability required and the number and types of hinders that were identified in the system. Otherwise appropriate changes to design, procedures or training can be proposed to address identified shortfalls. Each scenario can be evaluated, and perhaps tested in real flight situations or in simulation, not connected per se to the use of the tool, until a desired level of confidence in pilot performance is reached.

The system according to a possible embodiment may also include compensation. Another form, not shown, similar to those disclosed here, may identify helps or other information that may compensate for otherwise identified hinders. These may include, by way of example, compensation due to the fact that a hinder identified as resulting from an indicator located behind an operator being compensated for by the fact the operator is routinely directed to observation of that location for some other reason, including training or procedure dictating routine monitoring of the indicator despite its inconvenient location. If compensation such as this exists, then the hinder can be removed or reduced in value as a negative influence on reliability.

According to aspects of a possible embodiment, applicants have chosen to implement a human reliability assessment tool as a checklist in a spreadsheet format, such as in Microsoft "Excel®," in order to enhance usability, perform automated data analysis and to provide guidance through the assessment process. Microsoft Excel®, also denoted as Excel@ or Microsoft Office Excel@ (herein "Excel®") is a spreadsheet application available from Microsoft Corporation of Redmond, Washington, USA. Also the possibility is maintained for review or revision of parts of the assessment on an ongoing basis, temporarily, e.g., for some selected assessments, or on a more permanent basis. It will be understood, that other forms of structured electronic data or information collection documents may be utilized with similar effect, such as data entry forms created for use for standardized data and information entry into a data base, such as a relational data base, such as Microsoft Access®. Access®, also denoted as Microsoft Access® or Microsoft Office Access®, herein "Access®", is available from Microsoft Corporation of Redmond, Washington, USA.

The spreadsheet format facilitating the human reliability assessment tool may be operable on any computerized device or system having any operating system. The computerized system may have a processor capable of enabling a computer program by carrying out instructions from programmable code, such as code associated with a computer program like Excel@. The computerized system may further include a power supply, a plurality of additional processors or microprocessors, input devices, memory components and a display device. Any number of computerized devices may be used in combination with or independent of one another. More than one computerized device may be in communication with one another via one or more network connections.

It will be understood that the term spreadsheet as used herein can include an electronic or computerized spreadsheet in the form of at least one worksheet or work page, but more often a plurality of worksheets or work pages, such as may sometimes be denominated as a workbook, e.g., in the above noted spreadsheet application Excel®. The spreadsheet or workbook includes the separate worksheets or work pages into which may be entered data in the form of, e.g., text or numbers, and the spreadsheet application is utilized to manipulate, link, sort or otherwise operate upon the data entries according to definable operations. It will also be understood, as noted above, that the individual worksheet(s) is organized with content that can represent a checklist of information regarding a given scenario, or a given demand upon an operator for action, or other aspects of the desired risk analysis assessment being conducted using possible embodiments of tool of the present application.

In that sense, the worksheets each represent a worksheet within a human reliability evaluation checklist spreadsheet. That is, the human reliability evaluation checklist, which may be based on a model for evaluation of human performance, such as a Rasmussen Step Ladder Model, is implemented in a spreadsheet format, such as an Excel® spreadsheet.

It will also be understood that the tool according to aspects of a possible embodiment, is not limited to an Excel@ spreadsheet and its denominated "workbook" collection of one or more worksheets. There are other available electronic or computerized spreadsheet applications that can be utilized to implement the functions and utilities of the spreadsheets described in the present application. As noted above, other electronic or computerized text and numerical data entering, manipulating, linking, sorting or performing of other operations upon the entered data and the like data manipulating applications, that are also available to duplicate or emulate the functions and utilities of worksheets as disclosed in the present application. These may include relational databases such as the above noted "Access®" relational database, wherein such functionalities as data entry forms and manipulation reports and the like implemented in such a data collection and manipulation tool as an "Access®" relational database, may be set up to perform the data entry, linking, sorting, manipulating and other forms of operating upon the data as described in the present application.

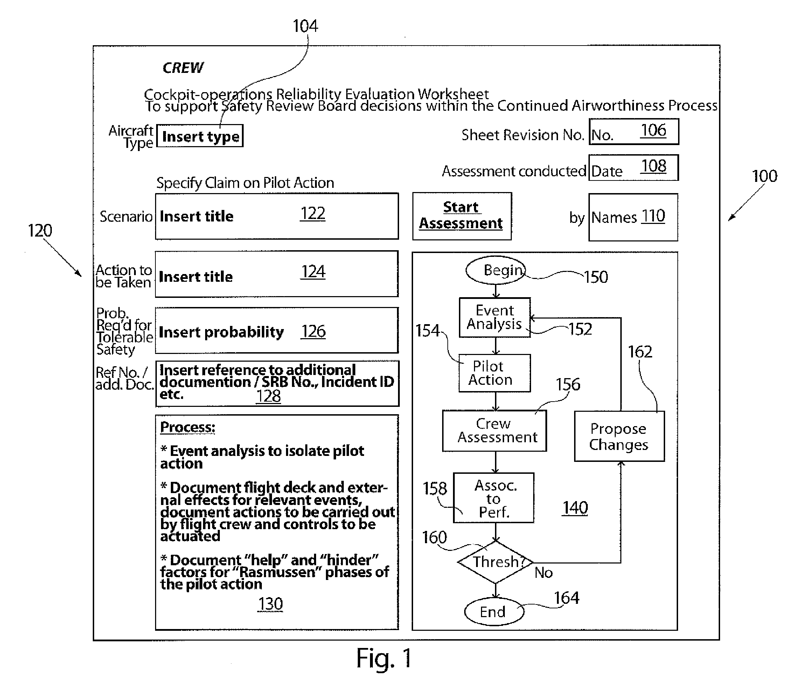

As can be seen from FIG. 1 a short briefing on the human reliability assessment process is given in block 130 and the process flowchart is given in block 140. User inputs, such as from a scenario response assessor, are required for the scenario, the description of which, by title or otherwise appears in block 122, and for the required pilot action in block 124. Further the required probability of the pilot taking that action in order to reach a tolerable level of risk may be inserted in block 126. The aircraft type may be identified in block 104. Blocks with identical content to blocks 104, 106, 122 and 124 occur on the subsequent checklist Excel@ spreadsheet worksheets and may serve to link worksheets in a given scenario assessment worksheet.

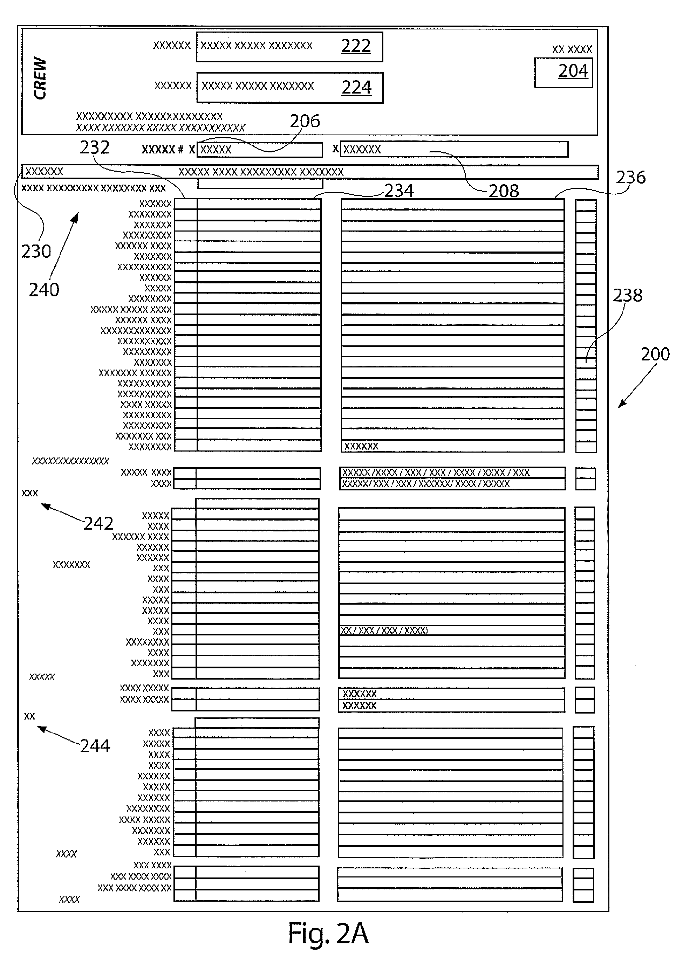

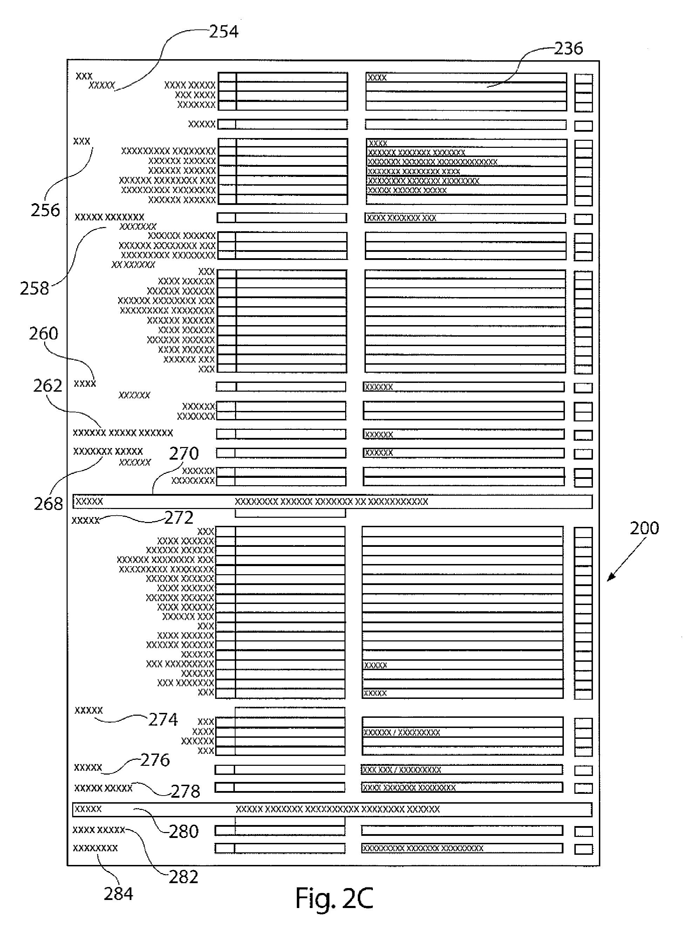

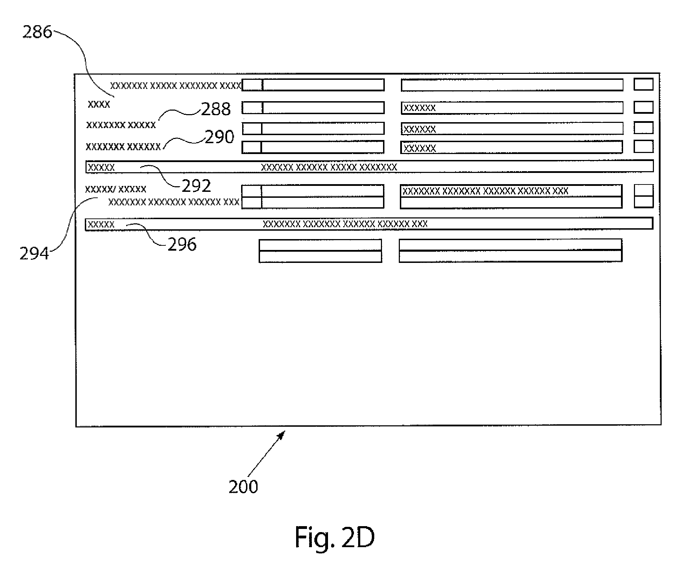

The first step of the assessment can be the flight deck and external effects for a given scenario 122 with a Documentation of Events worksheet 200 shown in FIGs. 2A to 2D. The assessor can report on a number of kinds of effects, such as a Visual effects in section 230, Aural effects, section 270, Tactile effects, section 280, Smells and Fumes, section 292 and Others, section 296. Flight deck effects can be documented for different, discrete events, which may be itemized in block 206 on the Documentation of Events worksheet 200 and corresponding blocks on subsequent worksheets, along a timeline. FIGs. 2A-D depict a flight deck reporting worksheet in which items can be checked as applicable and additional comments can be added.

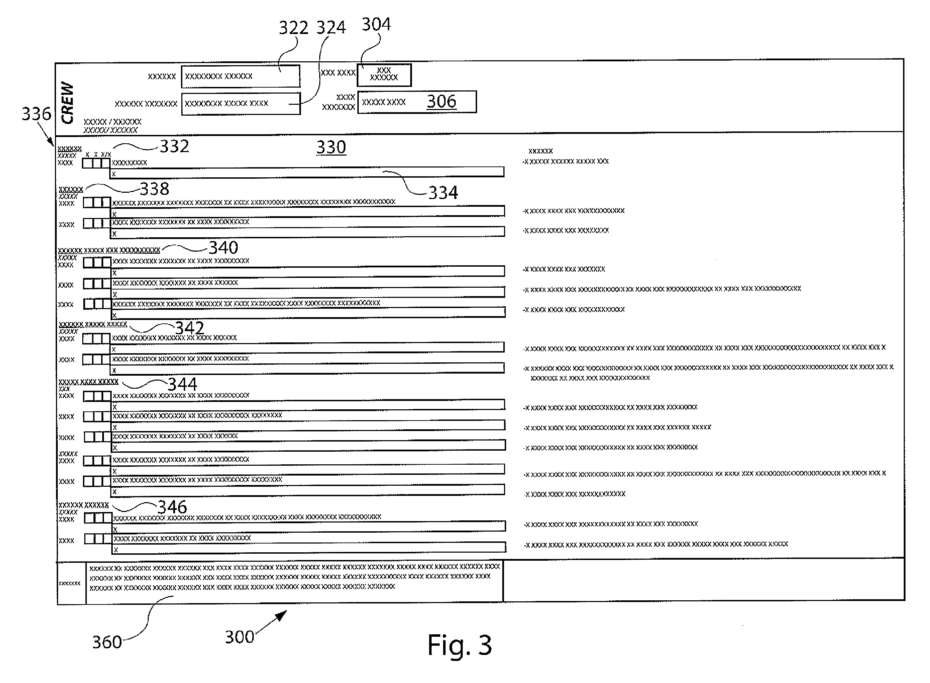

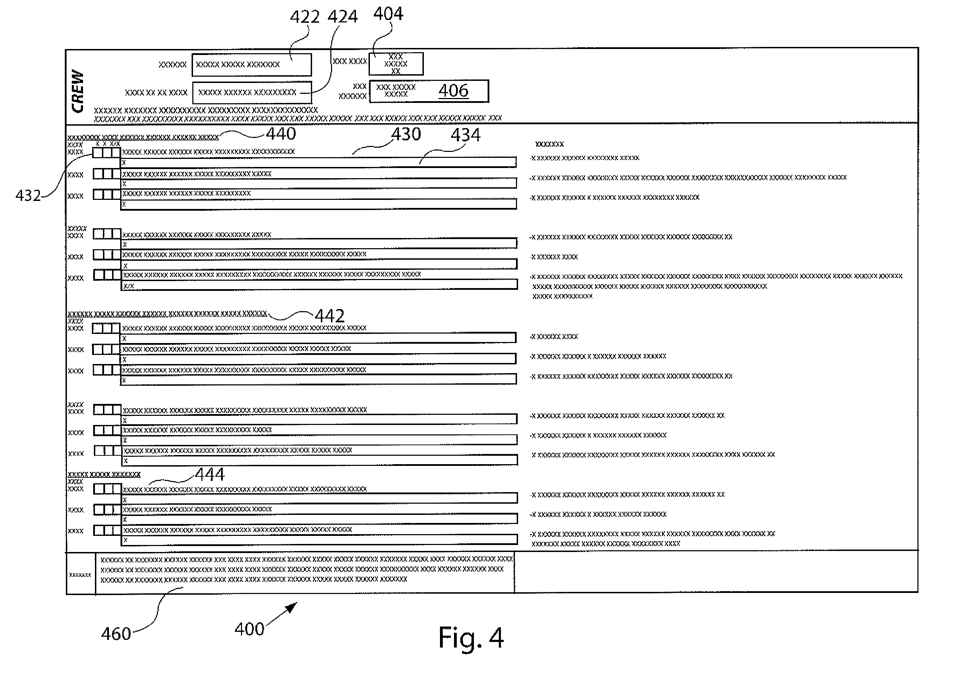

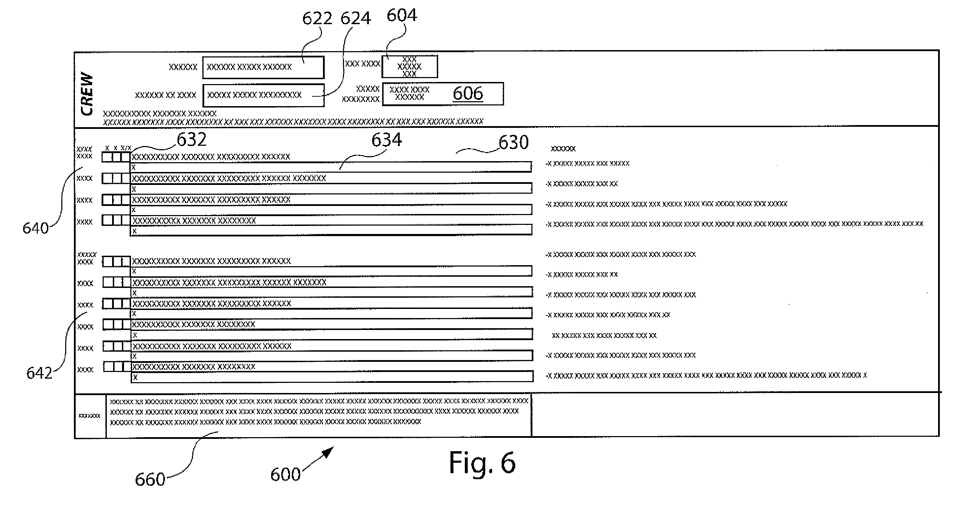

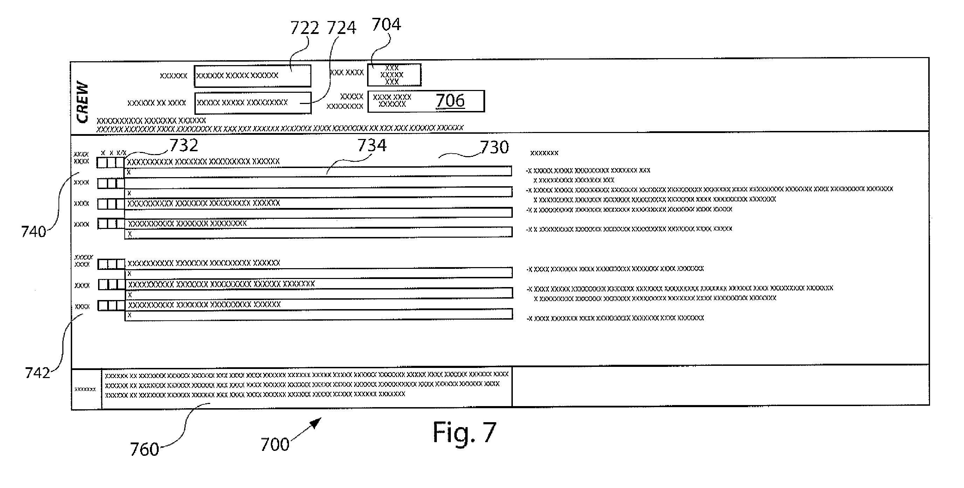

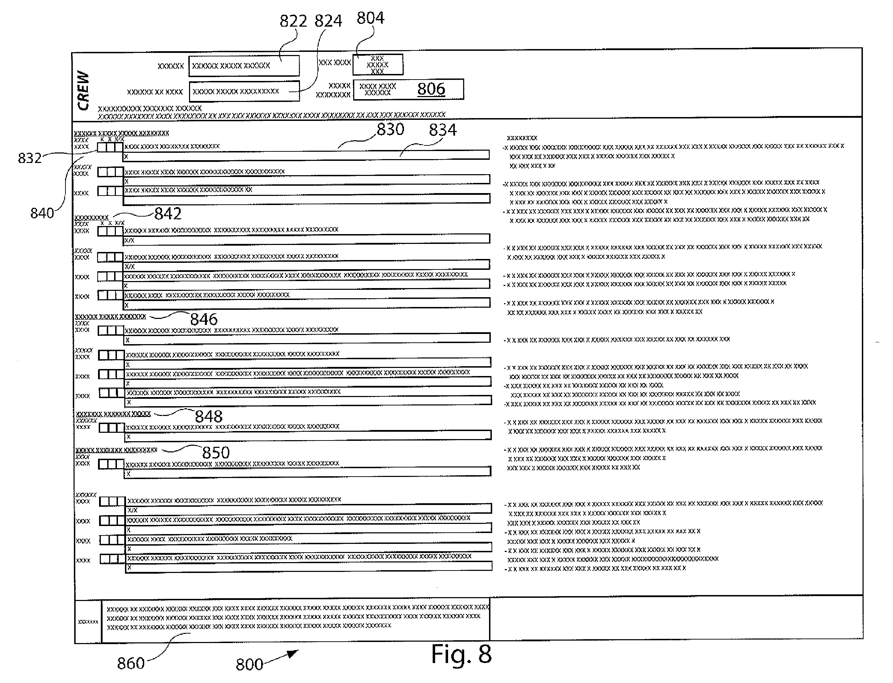

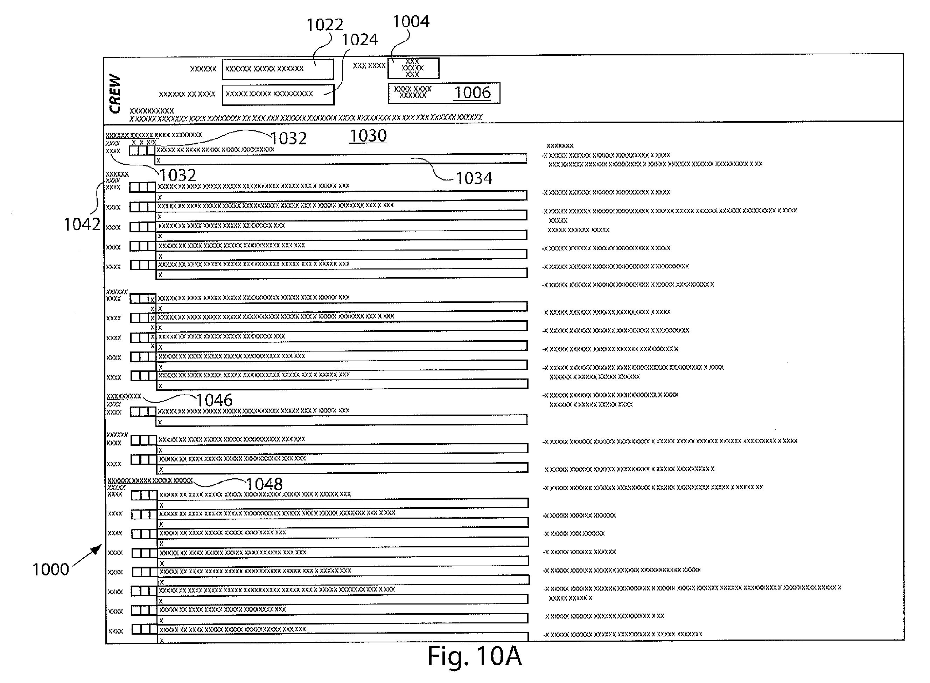

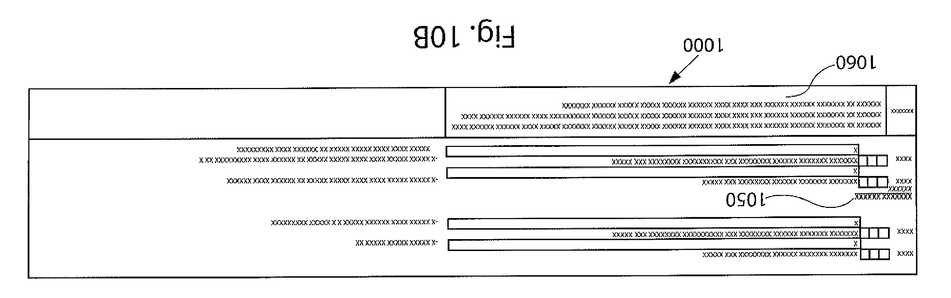

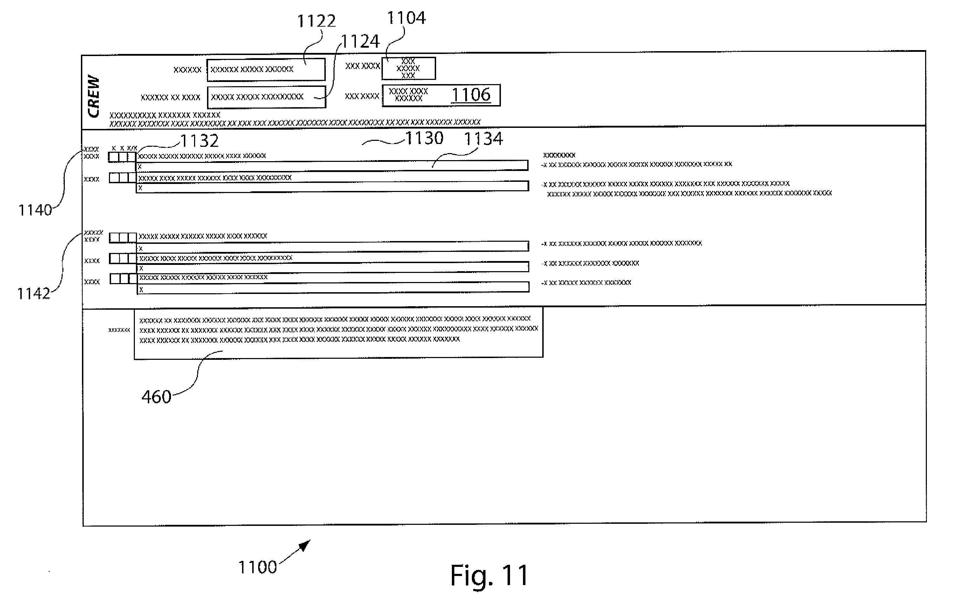

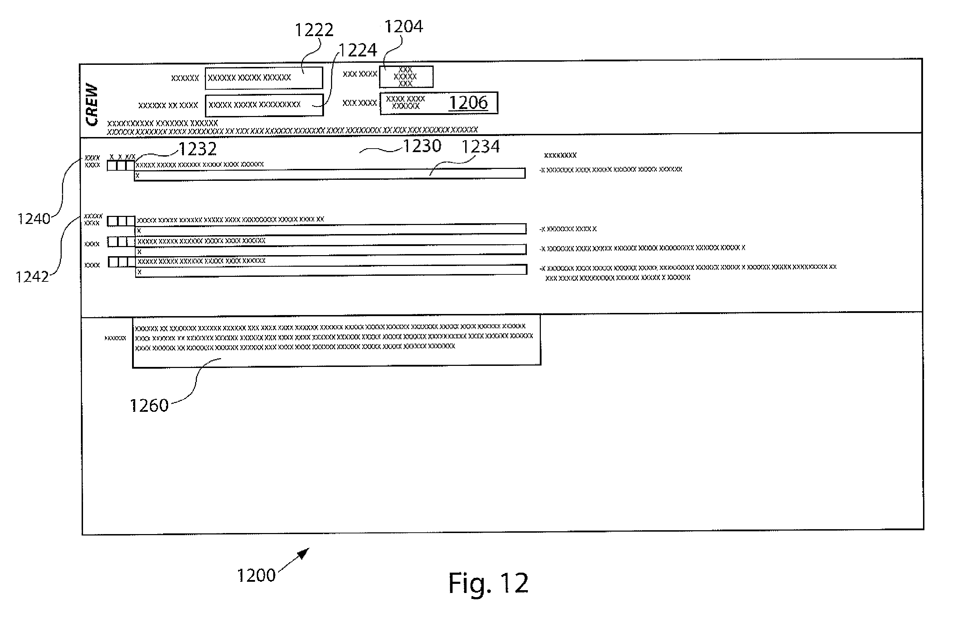

The checklist spreadsheet utilized for a complete assessment can have the following help/hinder assessment worksheets, which can be completed based on the stages of the Step Ladder Model, i.e., Alerting and Detection worksheet 300, shown in FIG. 3, Situational Assessment - Explanation and Interpretation of Observed Behavior worksheet 400, shown in FIG. 4, Selection of Action(s) to be Taken - Action Selection worksheet 600, shown in FIG. 6, Prioritizing Action worksheet 700, shown in FIG. 7, Intentional Deviation from Procedure worksheet 800, shown in FIG. 8, Execution worksheet 1000, shown in FIG. 10, Execution - Detection of Errors worksheet 1100, shown in FIG. 11, and Execution - Recovery from Errors worksheet 1200, shown in FIG. 12. The assessor can navigate between consecutive sheets using hyperlinks on each sheet (not shown). The "Welcome" worksheet 100 can be reached directly from every other checklist spreadsheet worksheet and vice-versa. Additionally, well-known Excel@ navigation tools—i.e., tabs--can be used for direct worksheet access.

Based on a human reliability action tree, such as an Operator Action Tree (OAT), an assessor can formulate a specific claim on the operator performing an action(s) in response to a defined scenario (abnormal operating condition, such as an abnormal occurrence during the flight of an aircraft or the operation of a ship or a nuclear reactor). The claim on the operator(s) including the specific scenario and action to be taken can be entered on the human reliability assessment tool checklist spreadsheet "Welcome" worksheet 100 and can then also be displayed on all sheets along with the description of the scenario. For the specific claim the assessor can then identify influential factors for each stage of the Step Ladder Model. The OAT may show relationships and represent dependencies between operator actions and how the associated claim(s) on operator action actually manifests itself. Essentially this shows the operator actions in the context of the given scenario (failure and a recovery path).

For each stage of the Step Ladder Model, potential "Helps", factors promoting a correct execution of this step of the Step Ladder Model, and "Hinders", factors that might interfere with correct execution of this step, may be defined. The assessor can then check the applicability of the help and hinder factors to the claim on operator action for the given scenario and the degree to which a factor is respectively an actual Help or an actual Hinder, e.g., rated numerically from 0 to +2 for Helps and 0 to -2 for Hinders according to the magnitude of influence of the factor. Helps and Hinders can then be used for a weighted quantitative analysis which, in turn can be used for evaluating potential confusions, errors of commission, etc.

Based on the number and character of Helps and Hinders that have been identified by the assessor, a first attempt of quantifying the results into human reliability "bins" can be made. A possible way of assigning the results to reliability bins could be a weighted evaluation of identified helps against hinders, to rate the situation as either free of significant hinders, significant hinders with mitigating helps or significant hinders without mitigating helps. It will be understood that the reliability assessment tool may have a built in compensation system. Hinders may be paired with related Helps or other factors which can compensate in the design of the assessment tool, alleviating or eliminating entirely the negative impact of a Hinder. The tool can thus allow for automatic designation of compensation items and for the inclusion of related terms that should be considered.

According to aspects of an embodiment of the disclosed subject matter a human reliability assessment tool checklist spreadsheet can include information entry items which can be formulated in a generic way so that the checklist worksheet implemented tool can be applied across a variety of operational environments, such as a variety of aircraft types. However, to facilitate use of the checklist by the safety assessors, generic items may be supported by potentially type-specific examples. To reduce clutter of the checklist the Examples are shown detached of the data entry items, also enabling print-off of the checklist without the Examples.

For every human reliability assessment tool checklist spreadsheet information entry item a space for comments can be provided for explanation why an item has been checked as a contributing factor in the situation (the addressing of the specific claim on operator action for the specific scenario), a non-contributing factor or as non-applicable, which designations can be entered into the data entry blocks 332, 432, 632, 732, 832,1032, 1132 and 1232 on the corresponding worksheets 300, 400, 600, 700, 800, 1000, 1100 and 1200 discussed below regarding FIGs. 3, 4, 6, 7, 8, 10A, 11 and 12. Also these three selectable data entry items can be used to make sure that every item in the checklist has been considered. Advantageously, according to aspects of an embodiment of the disclosed subject matter, the human reliability assessment tool checklist worksheet features an Excel®-based tool, which can be both verbal and graphical, such as the process flowchart 140 on the "Welcome" worksheet 100 as discussed below in regard to FIG. 1. The tool may serve to guide the user through the several stages of the assessment process.

Applicants have developed a checklist application process that is more visual and the terminology more intuitive for the assessor. Using a modified Step-Ladder-Model (SLM) diagram has enabled gaining an initial overview of the checklist and provided entry points into the assessment process. In addition, by developing the checklist in an Excel® spreadsheet or the like, such as a relational database data entry form, such as in Microsoft's Access®, the assessor is enabled to jump to the appropriate assessment stage rather than having to start from the beginning each time. The spreadsheet format also can be used to ensure that the assessor has completed all the relevant parts of the checklist.

In addition, a checklist can better be applied to the interface and procedures, as opposed to a specific operator, allowing for conclusions regarding the system not the individuals. The assessor is then the one required to do the thinking and the justification. The checklist framework allows for a valid and reliable review of the resolution of abnormal operating conditions (interface and procedures). This is enabled by documenting, systematically, how well the interface and/or procedures support the system operator(s) to resolve actual abnormalities in the course of operating the system, e.g., an aircraft in flight (including taxiing, take-off and landing as part of "in flight").

Assessment may be made of what "Claim" is being made on the operator(s) and justify "How" the situation resulting in the claim being made is to be managed or mitigated by actual and diverse operators, thus investigating the reliability of the system for the full range of operators. Answers to "How" questions can then be checked against factors that could "Help" or "Hinder" the operator in how the operator responds. The "Help" factors justify and support a positive response to the claim on operator action. The "Hinder" factors can stand in the way of the correct response. The factors can be reviewed by operators along with safety engineers or other assessors for accuracy, rather than just some "assessor calibration."

The checklist use can translate information provided in the assessment into a judgment as to confidence that the assessment is giving a correct answer, rather than the assessor is giving a correct answer. In other words by using the assessment to reliably assign the assessment to a confidence "bin", confidence can be judged by the thoroughness and quality of the analysis (i.e. of the claims being made, the argument to support the claims and the evidence to support the argument). More specifically, binning can be utilized to establish a level of reliability being assigned to the operator response to the scenario. Advantageously all of the assumptions and rationale behind judgments made using the tool are documented and auditable.

Checklist items can be supported by an operational example, which can be elaborated in close cooperation with operators, with the assessor providing a rationale for the decision made that the factor is a "Help" factor or a "Hinder" factor on the checklist. This supports the rationale for the "Help" scoring positively in seeing that a correct resolution of the claim on operator action occurs, or a "Hinder" scoring negatively in seeing that the correct resolution occurs. All relevant operational conditions or effects, such as flight deck related and external effects, occurring during a selected scenario can be documented. The scenario including the occurrence of an abnormal event that places a demand(s) on operator action for every unique event to be analyzed, can be documented and the documentation collected.

In the case of the exemplary assessment of abnormal occurrences during the flight of an aircraft, all indicators, signs, alarms, etc., all actions (checklists to be executed in the given scenario with their respective sub-steps, other recovery or corrective actions) and all controls to be actuated, including a detailed description of the control type, and actuation required can be documented. Capturing those data makes visible all assumptions made in the operator reliability assessment process, improving the traceability of the results as well as providing the assessor important guidance through the conduct of a performance evaluation process as the assessor(s) may not necessarily be an expert on flight deck interface or procedural issues. An assessor should have some expertise in operations of the system that is subject to the assessment.

The documentation of the operational environment, such as the flight deck effects for different scenarios can be done occurring along a timeline, as often, for a single malfunction scenario (possibly involving a series of events), indications and external effects develop over time during the progress of the flight. The assessor can then have the possibility of running the checklist for any stage along the timeline. The selected stage or event in the scenario can be indicated by the assessor and can be shown for every step of the assessment. Such documentation may be aircraft type specific, i.e. for every aircraft type a separate assessment checklist version can exist, because, in part, each scenario defined is specific to an operating environment, such as, a specific aircraft model, thus providing the assessor a comprehensive but limited selection of possible indications for the aircraft type to be checked against. Checklist items can be checked against applicability to the particular operational environment, such as a given flight deck, such as the particular terminology and other typical language used in the operation of, e.g., the particular flight deck.

A visualization of the performance assessment process can be provided by the diagrammatic representation shown in flowchart 140 on "Welcome" worksheet 100 of the checklist spreadsheet, discussed below in more detail in connection with FIG. 1. Assessment can start with breaking down the events in a given scenario into individual pilot actions, such as actions required to restore conditions to those required for safe flight that are part of a specified claim on pilot action identified by a specific scenario listed in Block 122 of the "Welcome" worksheet 100. On each of the pilot's actions to be assessed, specifically as referenced in the Action to be Taken block 124 on the welcome worksheet 100, and following worksheets, a claim can be made on the pilot to address a given non-normal occurrence scenario in a specified correct way, given a title in block 124 on the "Welcome" worksheet 100 and corresponding blocks on later worksheets of the checklist spreadsheet.

According to aspects of a possible embodiment an apparatus, process and programmed computer may be implemented using an evaluation process embodied, e.g., in a reliability evaluation system, such as a Cockpit-Operations Reliability Evaluation Worksheet ("CREW", hereinafter a "human reliability assessment tool spreadsheet"). This step is referenced by block 156 of the flowchart 140 of the "Welcome" worksheet 100. The spreadsheet may include many linked worksheets, including a "Welcome" worksheet 100. The spreadsheet may be utilized to support review processes, such as, SRB decisions within the review process, such as a safety review process.

The "Welcome" worksheet 100, which may be layered on a data processing application, such as a spreadsheet, like Microsoft Excel® or, as another possible example, a data entry form created for a database, such as a relational database, including Microsoft Access®. The "Welcome" worksheet 100 may include a box designating the specific system that is being evaluated, such as, a specific manufacturer model of an aircraft, for example, an aircraft type block 104, in which a user (assessor) may enter the aircraft type.

The "Welcome" worksheet 100 may also include a box 106 in which the user may indicate the specific investigation to which the Evaluation System Worksheet of "Welcome" worksheet 100, the assessment checklist spreadsheet "Welcome" worksheet 100, applies, i.e., a specific name or code designating a specific investigation, which may be entered into the Sheet Revision No. block 106 to document changes over time refinements, additions to the analysis of a specific scenario. The "Welcome" worksheet 100 may also include an Assessment Conducted date box 108 into which may be entered the date the assessment was begun or fully conducted or the date the "Welcome" worksheet 100 was completely filled in or the filling in was begun, or some other standardized date information relating to the identified specific scenario assessment. The analyst entering data into the "Welcome" worksheet 100 may identify themselves in an identity box 110.

The "Welcome" worksheet 100 may include a "Claim on Action" section 120, which may identify a specific scenario being evaluated, listed by designation or title in block 122. The Claim on Action section 120 may identify a specific claim on a crewmember for action. The action listed in block 124 is related to a definition or designation of a scenario, entered into a scenario block 122, for example, by a pre-designated title. The Action to be Taken block 124 may also contain a pre-defined title or other designation of the action to be taken under the given defined scenario, such as shut down a given engine, or shift to a given auxiliary system, etc.

The Claim on Action section 120 may also include a Probability Required for Tolerable Safety risk block 126 into which may be entered as an example, a target safety threshold probability. The claim section may also reference related documents in a Reference No. and Additional Documentation box 128. The reference may be to documentation relating to a specific aircraft, e.g., with an indication of how other items such as related documents may be identified. This may include a SRB identification number ("SRB No.") or reference to a specific incident identification number for a real life incident, the response to which is being assessed.

A Process section 130 indicates the use(s) of the worksheet, including for event analysis to isolate required operator action. Also indicated is documentation of the operational environment, such as flight deck and external effects, for relevant events, documentation of actions to be carried out by operator(s) and controls to be actuated. Further documentation of "help" and "hinder" factors, such as for use in evaluation of behavior, as an example, using "Rasmussen" phases of a Step Ladder Model of operator actions can be included.

A process flow chart section 140 illustrates the evaluation process according to aspects of the disclosed subject matter, including a beginning point 150 for a given in-service event (abnormal occurrence scenario) being evaluated, which proceeds to an event analysis block 152. The event analysis block 152 is followed by a required pilot action block 154, which leads to a CREW assessment block 156, in which the scenario and claim for operator action is assessed according to aspects of the disclosed subject matter. The CREW assessment block 156 is followed by an "associate to a performance bin" step in block 158, followed by a thresholds passed analysis block 160, which, if not passed leads to a feedback loop having a propose changes block 162 in which changes can be proposed to the design or procedures or both, proposed for changes to the event analysis block 152. However, if it is determined that the thresholds have passed in block 160, control passes to a program end block 164 where the process 140 ends.

The human reliability assessment checklist spreadsheet may also include a Documentation of Events worksheet 200 (hereinafter "the events worksheet 200"), as is illustrated in FIGs. 2A-2D. The events worksheet 200 may include heading blocks similar to those on the welcome worksheet 100, such as a scenario block 222, shown in FIG. 2A, that may include information taken from the related block 122 on the welcome worksheet 100 discussed above, and an action to be taken block 224 containing information taken from the related block 124 on the welcome worksheet 100. The events worksheet 200 may also include an Event No. block 206, which may identify an event within the scenario that may trigger a set of flight deck effects, and an aircraft type block 204 which may identify the aircraft type. There may also be a comment block 208 related to the event number block 206. The events worksheet 200 may include a Visual events section labeled 230 in FIG. 2A, for describing the visual effects related to the event listed in block 206, and which may include exist or non-exist blocks 232 indicating the existence or non-existence of a particular listed visual effect and blocks 234 for listing characteristics related to each specific visual effect along with comments in comments blocks 236. Blocks 238 may allow for comments on a later event that triggers new flight deck effects.

The visual events listed in the visual section 230 of the events worksheet 200 may include, in the aircraft cockpit analysis example, a Main Panel Warning or Caution Lights section 240, (hereinafter "the main panel lights"). The main panel lights listed may include, e.g., FIRE WARN, MASTER CAUTION, AUTOLAND, WINDSHEAR, TAKEOFF CONFIGURATION, CABIN ALTITUDE, BELOW glide slope ("G/S"), STABIZERS OUT OF TRIM, autopilot ("A/P") DISENGAGE (red), A/P DISENGAGE, amber, autothrottle ("A/T") DISENGAGE, red, A/T DISENGAGE, amber, flight management computer ("FMC"), SPEEDBRAKES EXTENDED, SPEEDBRAKES DO NOT ARM, leading edge ("LE") FLAPS TRANSIT, FLAP LOAD RELIEF, ICING, NO ICING, ANTI SKID INOPERABLE, AUTO BRAKE DISARM, BRAKE TEMPERATURE, GROUND PROXIMITY INOPERATIVE, and OTHER.

The events worksheet 200 may also have a Primary Flight Display ("PFD") section 242 of the visual effects section 230. The listed items also relate to various visual indicators or indications, "herein collectively indicators," that may be observed or sensed on a flight deck of an airplane. The visual section 230 may also include navigation display indicators in an ("ND") section 244. Other/Graphics and Other/Text, may also be described in the accompanying blocks 234 and 236.

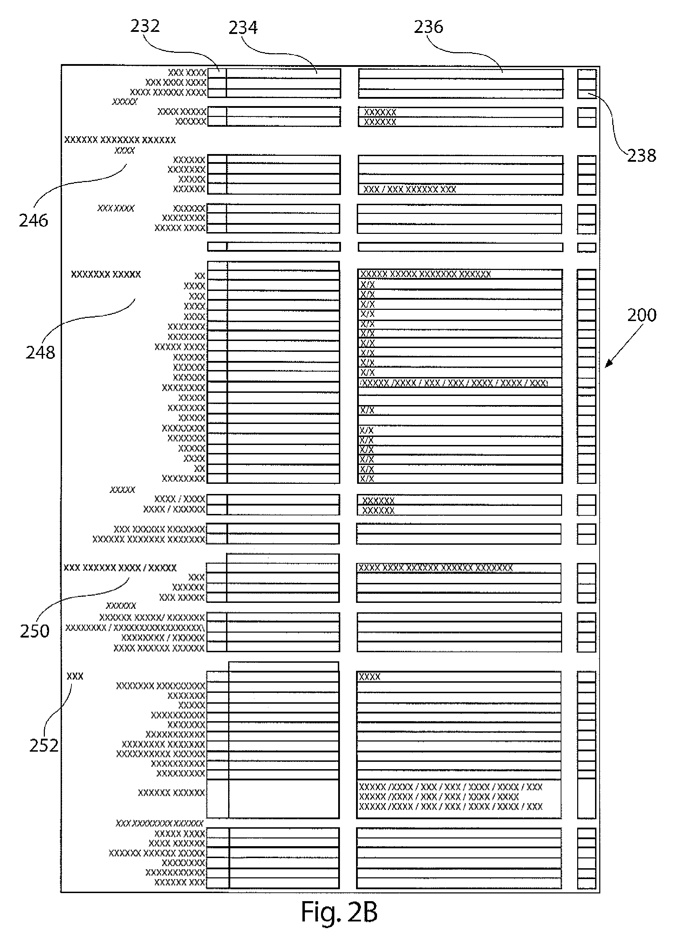

As shown in FIGs. 2B-2D, the events worksheet 200 may also include a Standby Flight Instructions section 246, which may include a listing of Integrated Standby Flight Display ("ISFD") and non-ISFD items. The events worksheet 200 may also include, as also shown in FIG. 2B, an Engine Indicators section 248. The Engine Indicator section 248 may include a listing of items, which may also include mode designations in the blocks in the accompanying section 236. The events worksheet 200 may also have a System Status Light/Switch section 250 with associated listings. The events worksheet 200 may also have a heads up display ("HUD") section 252, an electronic flight bag ("EFB") section 254, which may include a listing of possible faults, an ("FMC") section 256, an Other Indication section 258 and a fire section 260. The visual section 230 may also include a Visual Damage to the Aircraft section 262 and an Outside Visual section 268. The events worksheet 200 may also have an Aural portion 270, for describing aural signals, warnings and noise associated with a given event, including, a Voice section 272, a Signal section 274, a Noise section 276, and a Communication Event section 278.

The events worksheet 200 may also have a Tactile portion 280, which may include a Stick Shaker section 282 and a Vibration section 284. The Tactile portion 280 may also include sections 286, 288 and 290, respectively for Jerks, Jammed Controls and Unusual Handling entries. The events worksheet 200 may also include a Smells portion 292, 294 for describing smells and fumes for a particular event. Finally, the events worksheet 200 may have a miscellaneous Others portion 296 for describing other abnormalities for a given event. As can be seen, the checklists illustrated here may include other possible indicators for the particular system (e.g., a model of aircraft), such as visual, aural, tactile, scent, etc. that could be of value during a given scenario, including sensing environmental cues that are not part of the system per se, such as the smell of smoke, noises, etc.

The human reliability assessment checklist spreadsheet, utilized as part of the apparatus, method and computer programmed machine of the disclosed subject matter of the present application, may include an Alerting/Detection worksheet 300 as illustrated by way of example in FIG. 3, which may be utilized at least in part to evaluate things that help or hinder detection of the problem/non-normal/mis-configuration by the operator in the exemplary embodiment discussed in the present application. More specifically, the Alerting/Detection worksheet 300 relates to evaluation of helps and hinders in the operator(s) being alerted to and/or detecting the problem described in block 322, and in particular, the event identified in Block 306. The worksheet 300 can have the same heading blocks associated with the worksheet 300 as with worksheet 100, i.e., Aircraft type 304, Event described 306, Scenario 322, and Action to be taken 324, similarly related to blocks 104, 106, 122 and 124 of the welcome worksheet.

The Alerting/Detection worksheet may include information entry blocks 330, in a section 336 for listing specific helps and hinders. The worksheet 300 may also include blocks (e.g., Legibility section 332) to designate the alerting/detecting help/hinder mechanism as being true or not true for the flight deck effects or not applicable, and comment blocks 334 for entry of justification or rationale for the box checked. Also, each item is assigned a weight to express its importance in influencing operator performance. The weighting scheme chosen relates to the degree to which the hinder is a problem and the degree to which a help has a positive effect on the operator properly being alerted to or detecting the scenario event. It will be understood that other weighting schemes can be employed and the specific scheme illustrated here is for reference only and not limiting.

As an example in a Legibility section 332 regarding a possible hinder relating to legibility, the evaluation may relate to whether the indicators are too difficult to read, and may score a -1 if the respective indicator has digits or bugs (i.e., markings of a commanded value on an indicator) that are too small. In a Location section 338, the evaluations may relate to whether the indicator is available to all crewmembers or only to one and not likely to be observed by any or all others, and whether the indicator is in a forward field of view and/or centrally located. Item weights may be -2 because the indication, such as on an EFB airport moving map, is only available to a single pilot or because the Leading Edge Devices Transit light is located behind the pilots. This is an example of the use of a weighting scale, such as from -2 to +2, or more particularly -1 and -2 for hinders and +1 and +2 for helps, other such scales being possibly applicable. The -2 values may be assigned in the exemplary scale discussed here where the hinder is most detrimental to satisfactory operator reliability.

A Masked/Obscured/Misdirected section 340 may evaluate hinders such as an indicator seeming to operate properly, but having valid output readings only intermittently, or an indicator having a normal indication, when under the circumstances that indicated parameter is abnormal, or an automated or system activity occurs that obscures or masks a primary event occurrence. Weights may be assigned here as well. Therefore, items that are believed to help, in the context of worksheet 300, i.e., that help in the alerting/detection or hinder in the alerting/detection step in the performance model are identified and weighted with some selected value. Tangible examples of each item that helps aid in the evaluation.

A Mental Effort Required section 342 may include evaluation of the hinder rating for reasons of non-normal range not being explicitly shown on the indicator or the non-normal event does not manifest in an indicator and must be felt by the operator, e.g., erroneous air speed indication, due to pitot-static tube system malfunction and the non-normal range of airspeed not indicated on the gauge, or engine running below takeoff thrust due to frozen engine air duct ports and indications of sufficient thrust, requiring the pilot to recognize the difference in a short time period, or -2 for the need for_unusually high control forces in airplanes with asymmetrical flaps. Workload/Attention section 344 and Negative Transfer section 346 are similarly organized and data similarly recorded regarding Helps and Hinders. The worksheet 300 may also have a comments section 360 in which the evaluator may enter additional information, rationales and justifications to support the choice of items being helps and hinders.

The human reliability assessment tool checklist spreadsheet may include a Situational Assessment - Explanation of Observed Behavior worksheet 400, illustrated as an example in FIG. 4. The worksheet 400 may relate to assessment of how the interface/procedures and training support the operator to understand the nature and severity of the failure/non-normal event. The worksheet 400 can have the same heading blocks associated with the worksheet 400 as with worksheet 100, i.e., 404, Aircraft type, 406, Event described, 422, Scenario, and 424 Action to be taken. The worksheet 400 may have a data entry portion 430 including comments blocks 434. The worksheet 400 may include a Description of Problem Nature and Consequences section 440, a Compete section 442 and a Mental Effort Required section 444 in which there may be listed Helps and Hinders. The worksheet 400 may have a Comments section 460.

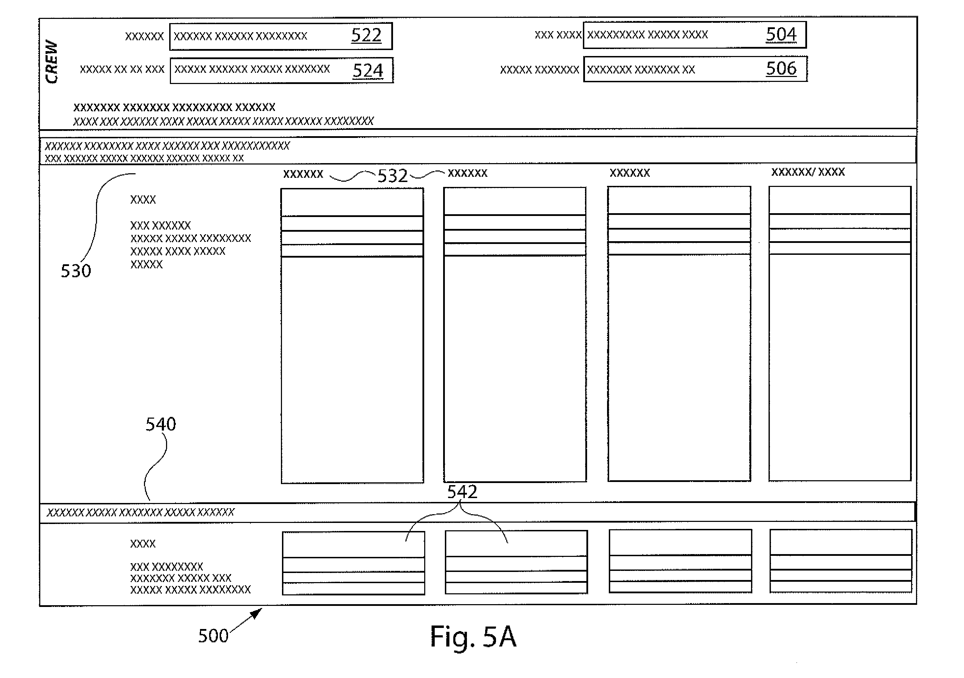

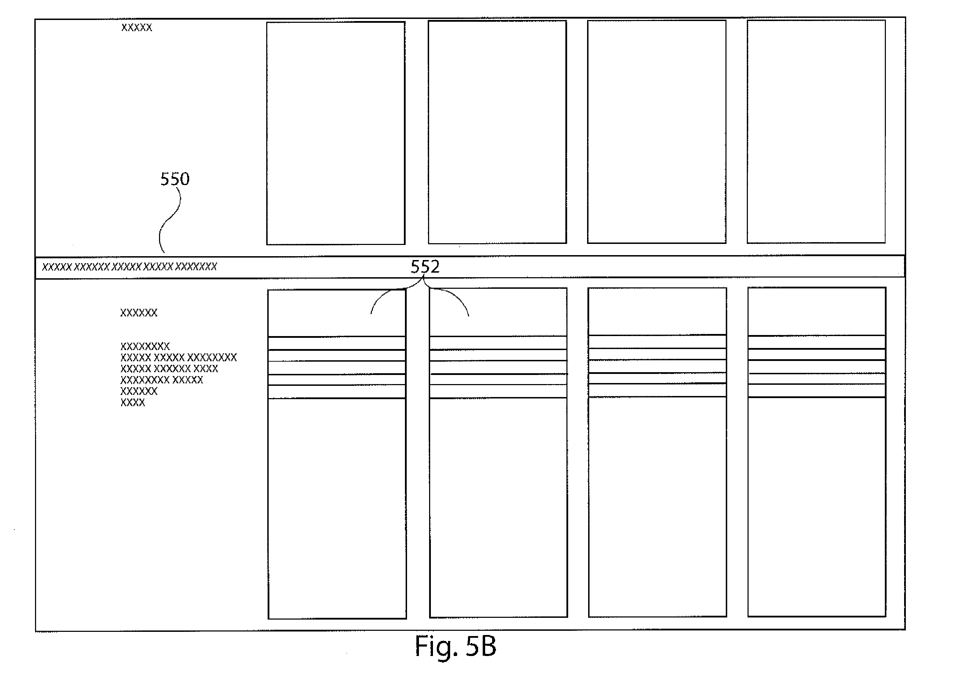

The human reliability assessment tool checklist spreadsheet may include a Documentation of Actions to Be Taken worksheet 500 as illustrated in FIGs. 5A-B, which can have the same heading blocks as noted above, specific to the worksheet 500, i.e., 504, Aircraft type, 506, Event described, 522, Scenario, and 524, Action to be taken, and may be utilized to record descriptions, such as of checklists/actions, with a plurality of entry columns 532 for multiple checklists. The Actions worksheet 500 may include an Annunciated Checklist section 530 in which the particular checklist(s) can be indicated, an Unannunciated Checklist section 540 with entry blocks 542 and a Non-Checklist Actions section 550, with entry blocks 552.

The human reliability assessment tool checklist spreadsheet may include a Selection of Action(s) to Be Taken worksheet 600, illustrated in FIG. 6. The worksheet 600 can be utilized to analyze how the interface/procedures support the flight crew in selecting the correct non-normal checklist/determining the correct course of action. The worksheet 600 can have the same heading blocks associated with the worksheet 600 as with worksheet 100, i.e., 604, Aircraft type, 606, Event described, 622 Scenario, and 624, Action to be taken. A data entry section 630 may have a list in section 640 of Helps and Hinders in section 642 with associated entry blocks 632 and 634 in a data entry section 630 of the worksheet 600. These may be utilized to record the appropriate Helps and Hinders. The worksheet 600 may also have a Comments section 660.

The human reliability assessment tool checklist spreadsheet may have a Prioritizing the Action worksheet 700, illustrated by way of example in FIG. 7, relating to how the interface, checklists and procedures support the flight crew in establishing priorities for their actions. The worksheet 700 can have the same heading blocks associated with the worksheet 700 as with "Welcome" worksheet 100, i.e., 704, Aircraft type, 706, Event described, 722, Scenario, and 724, Action to be taken. The worksheet 700 may list Helps and Hinders in a data entry section 730 with a Helps section 740 and a Hinders section 742, and accompanying comments blocks 734. The worksheet 700 may also have a Comments section 760.

The human reliability assessment tool checklist spreadsheet may also have an Intentional Deviation from Procedure worksheet 800, illustrated in FIG. 8 by way of an example. The worksheet 800 may be utilized to evaluate whether there are factors that would cause the crew to delay taking an action explicitly indicated in a procedure and/or to take an action outside of procedures (i.e., commission of an error(s)). The worksheet 800 may have the usual heading blocks 804, 806, 822 and 824, associated with the related blocks on "Welcome" worksheet 100, and the usual data entry blocks 832 and 834 in a data entry section 830. The worksheet 800 may have a Compatibility with Common Sense section 840, an Uncertainty section 842, an Undesired Consequences section 846, a Standard Practice/Culture section 848 and a Delay or Alternative Solutions section 850, each with associated Help and Hinder listings. The worksheet may also have a Comments section 860, as noted above for other worksheets.

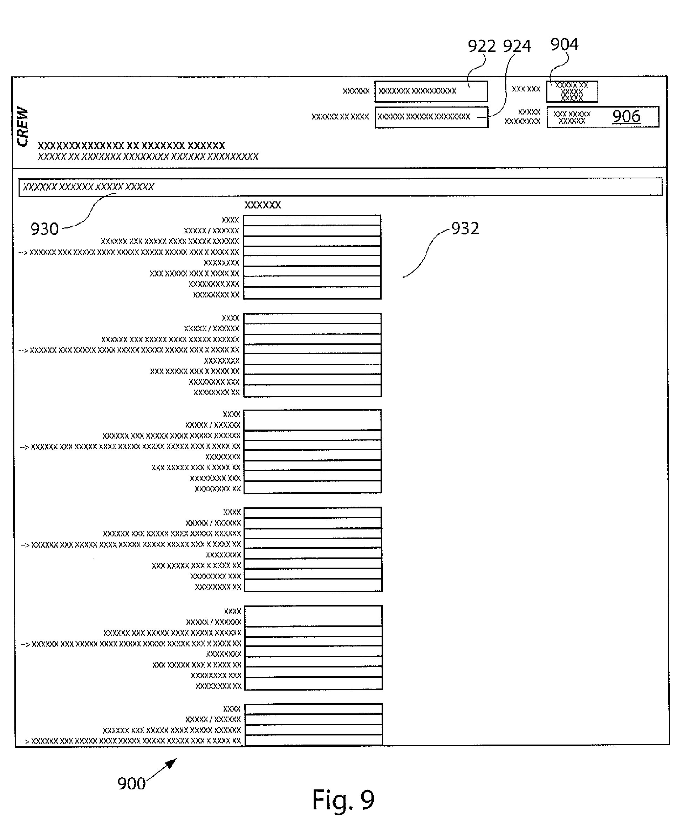

The human reliability assessment tool checklist spreadsheet may have a Documentation of Controls to Be Actuated worksheet 900 as illustrated by way of example in FIG. 9 for providing the descriptions of the appropriate controls in the data blocks 932, with the possibility of adding further blocks 932 for multiple and/or additional controls. The worksheet may have the usual heading blocks 904, Aircraft type, 906, Event described, 922, scenario, and 924, Action to be taken. The descriptions may include a Which Controls have to be actuated section 930.

The human reliability assessment tool checklist spreadsheet may also include an Execution worksheet 1000 illustrated in FIGs. 10A-10B, which may be used to analyze how the flight deck interface/the checklist support complete and accurate execution of the actions to be taken. The worksheet 1000 may have the usual heading blocks 1004, Aircraft type, 1006, Event described, 1022, Scenario, and 1024, Action to be taken, and the usual data entry portions 1032, 1034 in a data entry section 1030. The worksheet 1000 may also have a Compatibility with Common Sense section 1040, a Clarity section 1042, an Expectation section 1046, a Physical and Mental Demand section 1048 and a Negative Transfer section 1050, each with associated Helps and Hinders. The worksheet also contains the usual Comments block 1060.

The spreadsheet may also include an Execution - Detection of Errors worksheet 1100 illustrated in FIG. 11, which may be utilized to analyze how the interface, checklist and procedures support the flight crew in identifying errors in execution. The worksheet 1100 has the usual heading blocks noted for the other worksheets above, i.e., 1104, Aircraft type, 1106, Event described, 1122, Scenario, and 1124, Action to be taken. The worksheet 1100 may have the usual data entry blocks 1132 and 1134 in a data entry section 1130 and also list Helps in section 1140 and Hinders in section 1142. There is also the usual Comments section 1160.

The human reliability assessment tool checklist spreadsheet may also include a worksheet 1200 for Execution - Recovery from Error, illustrated by way of example, in FIG. 12, for evaluating how the interface/the checklists and procedures support recovery from error. The worksheet 1200 may have the usual header blocks, i.e., 1204, Aircraft type, 1206, Event described, 1222 Scenario, and 1224, Action to be taken. The worksheet 1200 may have the data entry blocks 1232 and 1234 in a data entry section 1230 and may include Helps in a Help section 1240 and Hinders listed in a section 1242. The worksheet 1200 includes also the usual Comments section 1260.

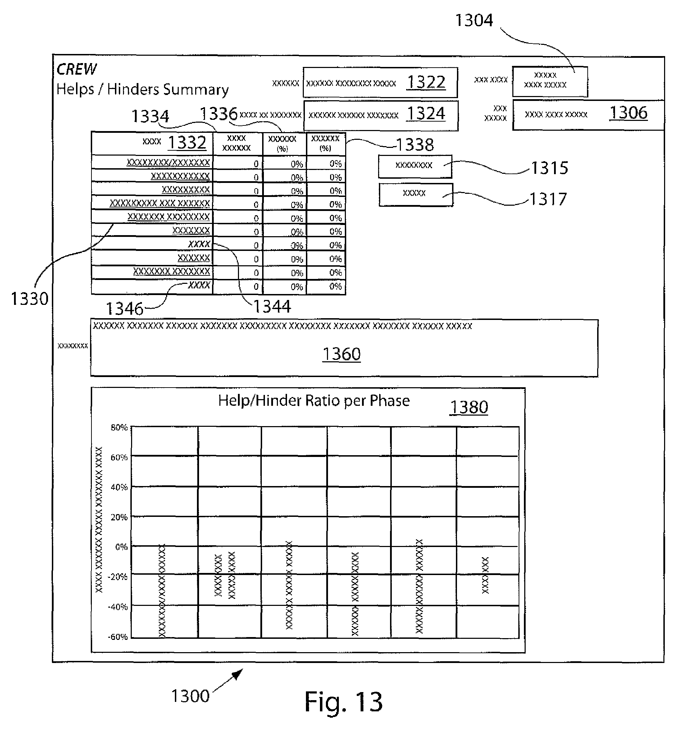

The worksheet may also include an Analysis worksheet 1300 illustrated by way of example in FIG. 13. The Table 1330 in FIG. 13, as discussed in more detail below, can be utilized to summarize the information collected, such as on spreadsheet worksheets 300, 400, 600, 700, 800, 1000, 1100 and 1200. The worksheet 1300 may have the usual header blocks, i.e., 1304, Aircraft type, 1306, Event described, 1322 Scenario, and 1324, Action to be taken. The chart 1380 may be utilized to visually represent the data listed in the Table 1330 or for another similar visual representation of some part or all of the assessment. The worksheet 1300 table 1330 may have a steps column 1332, a major hinders column 1334, a helpers column1336, and a hinders column 1338. The worksheet 13 00 includes also the usual Comments section 1360. The entries in columns 1334, 133& and 1338 maybe subtotaled in row 1344 and totaled in row 1346. Activation buttons 1315, for analysis, and 1317 may be utilized to execute the listed action.

In operation, and referring to the process listed in block 130 of worksheet 100 illustrated in FIG. 1 and the flow chart shown in block 140, HRA can be performed to isolate a required operator action, i.e., for a given scenario (listed in block 122 of FIG. 1) and operator action to be taken (listed in block 124). The scenario is selected in block 150 of the flowchart of block 140 of FIG. 1, defined in block 152 and the required operator action defined in block 154.

The assessor, as part of the CREW assessment of block 156 of FIG. 1 can then document an operational environment (such as flight deck) and external events (effects) on the worksheet 200, the action(s) to be taken by the operator on the worksheet 500 of FIGs. 5A-5B and controls to be actuated on the worksheet 900 of FIG. 9. Also as part of the CREW assessment of block 156, the assessor then develops a listing of hinders for the steps in the performance model, such as a Rasmussen Step Ladder Model, as illustrated in the worksheets 300, 400, 600, 700, 800, 1000, 1100 and 1200 of FIGs. 3, 4, 6, 7, 8, 10, 11 and 12 respectively. These hinders are then scored on a selected scale, such as a small hindrance (scored by way of example as a -1) and a large hindrance (scored by way of example as a -2), with other relative effect scales possible.

The assessor can then document, on the respective worksheets 300, 400, 600, 700, 100 and 1200, as illustrated for convenience here, or on a separate worksheet (not shown) the helps that can compensate (ameliorate or completely eliminate) the hindrance effect of a documented "Hinder." This can be done in a variety of ways, such as rating the "Help" on a similar scale of +1 for a small Help and +2 for a large help, such that a small Help can ameliorate a large Hinder to a small Hinder (change the Hinder from -2 to -1) by simple addition, or some percentage scale, e.g., the Help has a forty percent (40%) chance of elimination of the Hinder completely, so that in the example of large and small Hinders, the large Hinder may be reduced by 40% of -2, i.e., to a - 1.2 Hinder and a small Hinder may be reduced by 40% of -1 to a -0.6 Hinder.

These results, depending on the method selected to score a Hinder and the compensation for the Hinder to some degree by a Help, can be tabulated as in the example Table 1330 on the worksheet 1300 of FIG. 13. In the exemplary version of the table 1330, in each category of the Step Ladder Model stages listed, each the number of major Hinders can be listed in column 1334, for each of the worksheets 300, 400, 600, 700, 800, 1000, 1100 and 1200. Column 1336 can be utilized to list the percentage of Helps on a given worksheet that were marked as applicable, and the last column 1338 providing a listing of the percentage of Hinders on a given worksheet that were marked as applicable.

An assessment may be made of the Major Hinders listed on the respective worksheets Alerting/Detection (worksheet 300, "Detection/Observation" in the table 1330), Situational Assessment (worksheet 400, in the table 1330), Selection of Action to be Taken (worksheet 600, "Procedure Selection" in Table 1330), Prioritizing the Action (worksheet 700, "Selecting the Action" in Table 1330), Intentional Deviation from Procedure (worksheet 800) and Execution (worksheet 1000). These, along with the percentages of columns 1336 and 1338 may be utilized to create a subtotal on line 1344 for those worksheets and then combined with the like values for worksheets 1100 and 1200 for a final total on line 1346,

The Hinder ratings from Table 1330, or some manipulated form of such ratings selected for ease of understanding what data is presented, may be illustrated in chart form as suggested by a possible form of chart 1380 on worksheet 1300. As illustrated in the exemplary chart, the performance model phases for Execution - Discovery of Error and Execution - Recovery from Error are not included in the selected chart presentation. The overall goal is to support decision-making regarding reliability and such questions may be addressed as to whether hinders indicate a lower performance reliability than is needed from the operator.

The assessor, according to block 158 the flow chart of worksheet 100, may then assign the scenario assessment being performed to a "reliability bin". An example of a reliability bin may be that some selected acceptable error rate may be a target error rate, e.g., less than 1 error by an operator in every 10³ operational occurrences (e.g., flights), such that in less than 1x10⁻⁹ times will the scenario occur and the operator fail to appropriately respond, resulting in some undesirable outcome, like the airplane loses power to move flight control surfaces or stopping mechanisms due to, e.g., a hydraulic system malfunction/failure, etc. Therefore the target overall system reliability rate is less than 10⁻⁹ and target human reliability rate is 10⁻³. From such things as operational records, such as flight reports, it can be determined that, by way of example, the abnormal occurrence happens once in every 10⁸ flights, so that, to achieve an overall system reliability rate of at least 1 x 10⁻⁹, the operator needs to respond to the scenario correctly at least 9 out of 10 times. Similarly, if the abnormal occurrence rate is one in 10⁷ flights, the operator correct reliability requirement is at least 99 out of 100.

With this or like calculations, using the Hinder ratings, perhaps as compensated by Help ratings, to assess the likely operator response rate percentage, e.g., 9 out of 10 or 99 out of 100, the assessor can make a determination of whether or not the desired threshold (e.g., performance error rate) is acceptable in block 160, and if so the assessment ends and if not, there is a feedback loop to propose changes, such as in designs of indicators, alarms, etc. and/or procedures, such as check lists, in block 162.

In another example, all Hinder factors related to all or a selected subset of the Step Ladder Model stage-related worksheets, perhaps previously compensated by relevant Help factors, may be collected on a separate worksheet (not shown). Selection of the Step Ladder Model phase related worksheets may reflect a scenario evaluation in which the response is not the traditional multi-phase Step Ladder Model using all Step Ladder Model phases.

Actual operators, such as aircraft pilots/flight crews/operational and safety experts ("operators,") may be used to estimate how such operators are likely to behave in abnormal situations or scenarios under the circumstance of having a high degree of Hinder factors, a moderate degree or no degree. When making a judgment on this, and also on the degree to which a given Hinder is a detracting factor or a given Help is an ameliorating factor, the actual operators can be taking into account a variety of factors, specific to the very scenario case under consideration, such as crew interface; operational procedures; crew training; past events experienced by the crew; weather and other environmental conditions and such intangible factors as airline culture. Other stakeholders who may provide input can be airplane safety engineering, chief model and technical pilots and flight deck engineering. Applicants have noted that a tool according to aspects of the disclosed subject matter for looking at potential human performance related safety issues, where a safety determination may not be obvious, can be used to point out potential interface related hinder conditions, helping to make better decisions on elimination of or reduction of the hinder candition(s).

It will be understood that according to aspects of possible embodiments that a method, apparatus computerized tool and programmed computer have been disclosed that, among other things, can be utilized to identify how interfaces and procedures, and the helping aspects thereof, influence operator reliability in a given scenario. The tool can apply a method that identifies how the helps or interface features can compensate for hinders. The helps and hinders can be weighted to identify how much they influence the outcome of a reliability assessment. Carefully structured and organized data gathering built upon a proven and accepted human performance model ensures addressing all aspects of performance underlying the reliability assessment. Thus reliability relating to specific elements of performance, under the model, can be identified, including a break out of the time scale of system effects and indications for their separate consideration. The system and method can be utilized to identify required human reliability and provide an assessment decision in that context, without an attempt to generate an error rate.

Additionally, it will be noted that the tool according to the disclosed subject matter including an apparatus and method, computer program or programmed computer can implement a checklist process following a validated model of human performance. The tool can be utilized for assessment of operational environment, e.g., flight deck, specific performance such as by using shaping factors grouped in "helps" and "hinders". Operational examples can be used to facilitate checklist application. The tool structure allows for quantification of results and identification of the potential for pilot omission and commission errors, specifically within phases of a human decision/action process being assessed, thereby pointing to possible means of mitigation. The tool may also facilitate establishing required levels of performance to determine the adequacy of operational effects, such as flight deck effects.

It will further be understood that the tool according to the disclosed subject matter may include a computer-based operations reliability assessment tool, such as for cockpit/flight deck operations assessment, and may include a general purpose computer along with a checklist of process steps following a validated model of human performance including specific listings of relevant operational effects and respective linkages to a specific demand or demands upon the operator for required performance at a required level(s). The tool may provide a means for integrating assessor inputs to support decision-making about overall adequacy of design (e.g., indicators and actuators) and procedures (e.g., scenario operating checklists) useful for assessing risk management. The method may include operations reliability assessment including the steps of defining a scenario as an in-service event, defining a required action, such as a demand on the pilot/flight crew for action(s) and defining a required threshold level of reliability. The assessment method may further include documenting operation effects of the defined scenario and completing associated help/hinder checklists. Also included may be a summarization of the results and, where required, such as when the threshold is not met, recommendations for changes in design(s) or procedure(s) to assure overall system operational reliability in the case of the pertinent scenario. Operator (e.g., pilot/flight crew) reliability can thus be assessed for adequacy and assurance of overall system reliability.

The present disclosure will be also understood to disclose a method and apparatus for assessing human performance adequacy, which may utilize a checklist process that can employ checklists selected by following a validated model of human action in reaction to a selected scenario. The checklists and the worksheet associated with each may reflect inputs to and actions to be taken by a system operator during the selected scenario and within stages of the performance model. The checklists may be implemented as data entry items on an electronic structured information entry document such as a spreadsheet program worksheet and may be utilized to accumulate, organize and link the entered data regarding each specific checklist item, among other functions. The apparatus and method disclosed may relate to flight deck specific performance shaping factors grouped in "helps" and "hinders" depending upon the effect of the checklist item being considered to help or hinder the system operator in correctly reaching the desired outcome of the scenario for which performance is being assessed by using the apparatus and methods of the present application. In organizing and populating the checklists associated with the spreadsheet worksheets, operational examples facilitating checklist application may be employed. The apparatus of the tool of the present application and the method of using the tool can be structured to allow quantification of results and identification of the potential for operator omission and commission errors within a respective phase of the human decision/action process being assessed thereby pointing to possible means of mitigation. The tool of the present application may also be effective in establishing that a required level of performance by the operator for operator performance to be adequate can or cannot be achieved.

The disclosure will also be understood to describe a computer programmed spreadsheet worksheet based cockpit-operations reliability evaluation tool apparatus and method which may include a general purpose computer implementing a spreadsheet program or the like such as a relational database data manipulation program in which information relating to data entry items regarding a checklist of system operating process steps following a validated model of human action, which, within a given scenario definition defining input to and action to be taken by a system operator may be specific to a particular selected operating environment, such as aircraft-type specific, and may be formed from listings of relevant effects such as flight deck effects and their linkage to required performance levels. The method and apparatus may provide for integrating user inputs to support decision-making about overall adequacy of risk management. Such an apparatus and method specific to assessment of human performance in a scenario unfolding on a flight deck of an aircraft regarding inputs to and actions by a flight crew may include the steps of selecting a defined scenario, defining desired flight crew action, defining performance required, defining reliability needed, documenting flight deck effects, completing help/hinder checklists, in the form of one or more electronic data entry input, collection, linking, organizing, etc., mechanisms such as a spreadsheet program worksheet, summarizing results, and determining outcome in the form of recommendation as to whether "design" (flight deck interface and procedures) should be modified to assure overall system reliability or whether flight crew reliability seems to be adequate for assuring overall system reliability.

It should be apparent that the scope and content of the present disclosure are not limited to the above embodiments but should be considered in scope and content taking into account the manner in which the disclosed embodiments may be changed and modified without departing from the scope and spirit of the disclosed subject matter and claims, some of which changes and modifications have been noted above.

## Claims

1. A human reliability assessment tool, comprising:
at least one performance assessment worksheet regarding at least one of the group consisting of the evaluation of a scenario, the making of a decision selecting a response to the scenario, and the carrying out of the response, wherein the performance assessment worksheet is an electronic structured information entry document on machine readable media enabled by a processor of a computerized device;
a plurality of checklist information entry items incorporated into the performance assessment worksheet;
a modeling portion of the performance assessment worksheet structured for recording an information entry relating to a step in a model of human performance; and
a linkage between the checklist information entry items and a plurality of related effects within a relevant operational environment, wherein an automated determination is made as to whether specific performance levels are achieved within the relevant operational environment.

2. The human reliability assessment tool of claim 1, wherein the information entry items are incorporated into a spreadsheet program.

3. The human reliability assessment tool of claim 1, wherein the information entry relating to a step in a model of human performance provides for recording of information relating to assessment of the system interface and procedures for accomplishing a claim made on the operator under the scenario for a given operational environment.

4. The human reliability assessment tool of claim 1, wherein the information entry relating to a step in a model of human performance further comprises a hinder factor associated with the information entry, utilized to arrive at an error rating for the scenario to evaluate if the error rating is acceptable.

5. The human reliability assessment tool of claim 1, wherein the information entry relating to a step in a model of human performance comprises a help factor associated with the information entry ameliorating the impact of a hinder factor, utilized to arrive at an error rating for the scenario to evaluate if the error rating is acceptable.

6. The human reliability assessment tool of claim 1, wherein the performance being evaluated comprises the performance of at least one member of a flight crew of an aircraft.

7. The human reliability assessment tool of claim 1, wherein the information entries are grouped as helps and hinders.

8. The human reliability assessment tool of claim 1, further comprising a decision-making module in communication with the performance assessment worksheet, whereby the decision-making module validates an action to take based on the automated determination.

9. A method of assessing human reliability, the method comprising:
utilizing a performance assessment worksheet regarding any one or more of the group consisting of the evaluation of a scenario, the making of a decision selecting a response to the scenario, and the carrying out of the response; the performance assessment worksheet comprising an electronic structured information entry document enabled by a processor of a computerized device;
recording an information entry into the electronic structured information entry document, the information entry relating to a step in a model of human performance;
recording additional information entry items into the electronic structured information entry document;
linking the additional information entry items and a plurality of related effects within a relevant operational environment; and
automatically determining whether specific performance levels are achieved within the relevant operational environment based on the additional information entry items recorded.

10. The method of claim 9, wherein the electronic structured information entry document comprises a database entry form.

11. The method of claim 9, further comprising the step of providing for recording of information relating to assessment of performance in accomplishing a claim made on an operator under the scenario for a given operational environment, wherein the information relating to assessment of performance includes the information entry relating to the step in the model of human performance.

12. The method of claim 9, further comprising the steps of:
utilizing a hinder factor to arrive at an error rating for the scenario; and
evaluating if the error rating is acceptable, wherein the hinder factor is associated with the information entry.

13. The method of claim 9, further comprising the steps of:
utilizing a hinder factor to arrive at an error rating for the scenario;
utilizing a help factor to modify the error rating; and
evaluating if the error rating is acceptable, wherein the help factor and the hinder factor are associated with the information entry.

14. The method of claim 9, wherein the information entry items are grouped as helps or hinders.

15. The method of claim 9, further comprising utilizing the performance assessment worksheet to assess a performance of at least one member of a flight crew of an aircraft.
